(19) Europäisches Patentamt / European Patent Office / Office européen des brevets

(11) **EP 4 764 913 A1**

(12) **DEMANDE DE BREVET EUROPEEN**

(43) Date de publication:
**24.06.2026 Bulletin 2026/26**

(21) Numéro de dépôt: **25224773.9**

(22) Date de dépôt: **18.12.2025**

(51) Classification Internationale des Brevets (IPC):
**G06F 21/32** $^{(2013.01)}$       **G06V 40/40** $^{(2022.01)}$
**G06V 40/16** $^{(2022.01)}$

(52) Classification Coopérative des Brevets (CPC):
**G06F 21/32; G06V 40/172; G06V 40/40**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.12.2024 FR 2414480**

(71) Demandeur: **Commissariat à l'Energie Atomique et aux Energies Alternatives
75015 Paris (FR)**

(72) Inventeurs:
• **DESHAYES-CHOSSA, Jérôme
91191 GIF-SUR-YVETTE CEDEX (FR)**
• **POPESCU, Adrian
91191 GIF SUR YVETTE CEDEX (FR)**

(74) Mandataire: **Lavoix
2, place d'Estienne d'Orves
75441 Paris Cedex 09 (FR)**

(54) **PROCÉDÉ DE CONTRÔLE DE L'INTÉGRITÉ D'UNE VIDÉO D'AUTHENTIFICATION D'UN UTILISATEUR D'UN APPAREIL ÉLECTRONIQUE**

(57) La présente invention concerne un procédé de contrôle de l'intégrité d'une vidéo d'authentification d'un utilisateur d'un appareil électronique (10), comprenant :
a. la génération aléatoire d'une fonction de contrôle du zoom,
b. l'acquisition, par une caméra (14), d'une vidéo du visage de l'utilisateur, tout en contrôlant automatiquement le zoom selon la fonction de contrôle du zoom,
c. la détection du visage de l'utilisateur sur la vidéo acquise,
d. la détermination d'une fonction reconstruite de contrôle du zoom en fonction de l'évolution de la surface du visage détecté sur la vidéo, et
e. la corrélation de la fonction de contrôle du zoom à la fonction reconstruite de contrôle du zoom de sorte à obtenir un résultat de classification indiquant ou non si la vidéo peut être considérée intègre avec l'utilisateur physiquement présent devant la caméra (14).

FIG.3

EP 4 764 913 A1

**Description**

La présente invention concerne un procédé de contrôle de l'intégrité d'une vidéo d'authentification d'un utilisateur d'un appareil électronique. La présente invention concerne aussi un dispositif électronique de contrôle associé, et un appareil électronique intégrant un tel dispositif électronique de contrôle.

Les technologies de reconnaissance faciale sont largement déployées pour sécuriser l'accès aux appareils et applications numériques.

Bien qu'utiles, ces technologies sont l'objet de nombreuses attaques, telles que les injections vidéos qui remplacent les flux de la caméra par des répliques préenregistrées.

Des technologies de vérification de l'intégrité ont été développées pour contrecarrer ces attaques, en vérifiant la présence de l'utilisateur devant la caméra.

Toutefois, les méthodes actuelles exigent que l'utilisateur effectuent des actions explicites, ce qui limite leur convivialité et la simplicité d'utilisation.

Il existe donc un besoin pour un moyen de vérification de l'intégrité d'une vidéo destinée à être utilisée pour de la reconnaissance faciale, qui soit plus simple à mettre en œuvre et convivial pour l'utilisateur.

A cet effet, l'invention a pour objet un procédé de contrôle de l'intégrité d'une vidéo d'authentification d'un utilisateur d'un appareil électronique, l'appareil électronique comprenant un dispositif électronique de contrôle comprenant une caméra dotée d'un zoom automatique et une unité de calcul, le procédé de vérification étant mis en œuvre par le dispositif électronique de contrôle et comprenant les étapes suivantes :

a. la génération aléatoire, par l'unité de calcul, d'une fonction de contrôle du zoom, la fonction de contrôle du zoom étant propre à contrôler le zoom de la caméra sur une durée, dite période de temps de référence, divisée en N segments temporels, N étant un nombre entier supérieur à deux, la fonction de contrôle du zoom associant une action de zoom, parmi plusieurs actions de zoom possibles, à chacun des N segments temporels,

b. l'acquisition, par la caméra, d'une vidéo du visage de l'utilisateur positionné dans le champ de vision de la caméra, pendant une durée égale à la période de temps de référence, tout en contrôlant automatiquement le zoom selon la fonction de contrôle du zoom,

c. la détection, par l'unité de calcul, du visage de l'utilisateur sur la vidéo acquise,

d. la détermination, par l'unité de calcul, d'une fonction reconstruite de contrôle du zoom en fonction de l'évolution de la surface du visage détecté sur la vidéo, et

e. la corrélation, par l'unité de calcul, de la fonction de contrôle du zoom à la fonction reconstruite de contrôle du zoom de sorte à obtenir un résultat de classification indiquant ou non si la vidéo peut être considérée intègre avec l'utilisateur physiquement présent devant la caméra.

Suivant d'autres aspects avantageux de l'invention, le procédé comprend une ou plusieurs des caractéristiques suivantes, prises isolément ou suivant toutes les combinaisons techniquement possibles :

- les actions de zoom possibles sont les actions suivantes : zoom avant, zoom arrière et maintien du zoom actuel ;
- lors de l'étape de génération aléatoire, au moins l'un du nombre N, de la durée de chaque segment temporel et de la période de temps de référence, est généré aléatoirement pour chaque fonction de contrôle du zoom ;
- la durée d'au moins deux segments temporels est différente ;
- l'action de zoom associée à chacun des N segments temporels de la fonction de contrôle du zoom est choisie de sorte que lors de l'étape d'acquisition de la vidéo, l'intégralité de la surface du visage de l'utilisateur soit dans le champ de vision de la caméra pour chacun des N segments temporels ;
- l'étape de détermination comprend :

a. le calcul d'une surface du visage de référence en moyennant les surfaces du visage détectées sur la vidéo durant le premier segment temporel,

b. pour chacun des N segments temporels, le calcul du rapport entre la moyenne des surfaces du visage détectées sur ledit segment temporel, et la surface du visage de référence, et

c. la détermination de la fonction reconstruite de contrôle du zoom en fonction du rapport calculé pour chacun des N segments temporels ;

- l'étape de corrélation comprend la génération de séries temporelles auxiliaires à partir de deux séries initiales, les séries initiales étant une série de la fonction de contrôle du zoom et une série de la fonction reconstruite de contrôle du zoom, une première série auxiliaire étant la différence des deux séries initiales, une seconde série auxiliaire étant la différence des dérivées des deux séries initiales, des noyaux de convolution aléatoires étant appliqués aux séries initiales et aux séries auxiliaires, et la proportion de valeurs positives étant extraite, un classifieur étant appliqué à la proportion de valeurs positives extraite pour obtenir le résultat de classification ;
- la période de temps de référence est supérieure ou égale à 3 secondes.

L'invention a aussi pour objet un dispositif électronique de contrôle de l'intégrité d'une vidéo d'authentification d'un utilisateur d'un appareil électronique, le dispositif électronique de contrôle étant compris dans l'appareil électronique, le dispositif électronique de contrôle comprenant une caméra dotée d'un zoom automatique et une unité de calcul, le dispositif électronique de contrôle étant configuré pour mettre en œuvre un procédé tel que décrit précédemment.

L'invention a également pour objet un appareil électronique, tel qu'un téléphone portable ou une tablette connectée, comprenant un dispositif électronique de contrôle tel que décrit précédemment.

L'invention apparaîtra plus clairement à la lecture de la description qui va suivre, donnée uniquement à titre d'exemple non limitatif, et faite en référence aux dessins dans lesquels :

[Fig. 1] la figure 1 est une vue schématique d'un exemple d'un appareil électronique comprenant un dispositif électronique de contrôle,

[Fig. 2] la figure 2 est un organigramme des étapes d'un procédé de vérification de l'intégrité d'une vidéo d'authentification d'un utilisateur d'un appareil électronique, et

[Fig. 3] la figure 3 est une représentation schématique d'étapes d'un procédé de vérification de l'intégrité d'une vidéo d'authentification d'un utilisateur d'un appareil électronique.

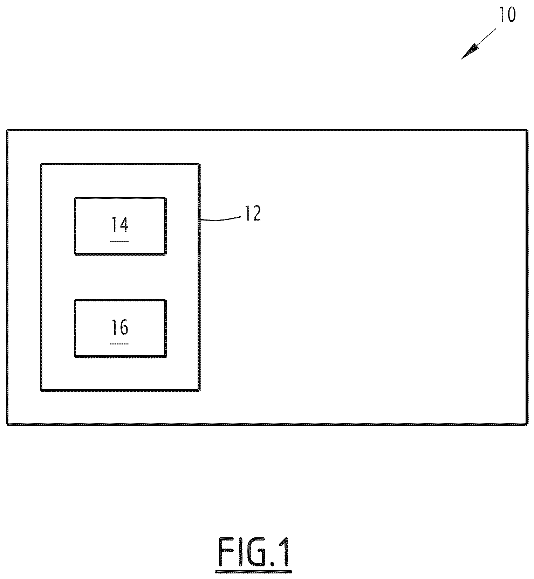

Un exemple d'appareil électronique 10 est illustré par la figure 1.

L'appareil électronique 10 est, par exemple, un téléphone portable (en anglais smartphone) ou une tablette connectée, ou tout autre appareil électronique pour lequel une authentification de l'utilisateur est requise.

L'appareil électronique 10 comprend un dispositif électronique de contrôle 12.

Le dispositif électronique de contrôle 12 est configuré pour acquérir et vérifier l'intégrité d'une vidéo d'authentification de l'utilisateur de l'appareil électronique 10.

Le dispositif électronique de contrôle 12 comprend une caméra 14 dotée d'un zoom automatique et une unité de calcul 16. Dans un exemple de mise en œuvre, la caméra 14 et/ou l'unité de calcul 16 sont communes à l'appareil électronique 10 et intégrées dans l'appareil électronique 10.

La caméra 14 est propre à acquérir des images ou vidéos, et en particulier des vidéos visant à authentifier l'utilisateur de l'appareil électronique 10.

L'unité de calcul 16 est configurée pour mettre en œuvre certaines des étapes d'un procédé de vérification de l'intégrité d'une vidéo d'authentification, qui seront décrites plus en détails dans la suite de la description.

L'unité de calcul 16 comprend par exemple un processeur et une mémoire dans laquelle est mémorisée un produit programme d'ordinateur, permettant de mettre en œuvre certaines des étapes du procédé de vérification.

Dans un exemple, l'unité de calcul 16 est un processeur graphique (en anglais GPU pour graphical processing unit), tel qu'un processeur graphique intégré sur un téléphone portable ou une tablette connectée.

En variante, l'unité de calcul 16 est sous la forme d'un circuit intégré, tel qu'un ASIC (de l'anglais Application-Specific Integrated circuit, traduit en français par « circuit intégré propre à une application »), ou d'un circuit imprimé, tel qu'un FPGA (de l'anglais Field-Programmable Gate Array, traduit en français par réseau de portes programmables in situ).

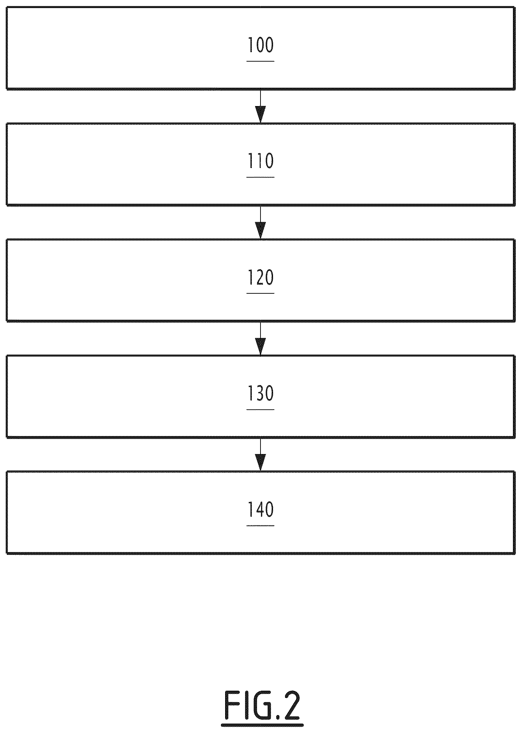

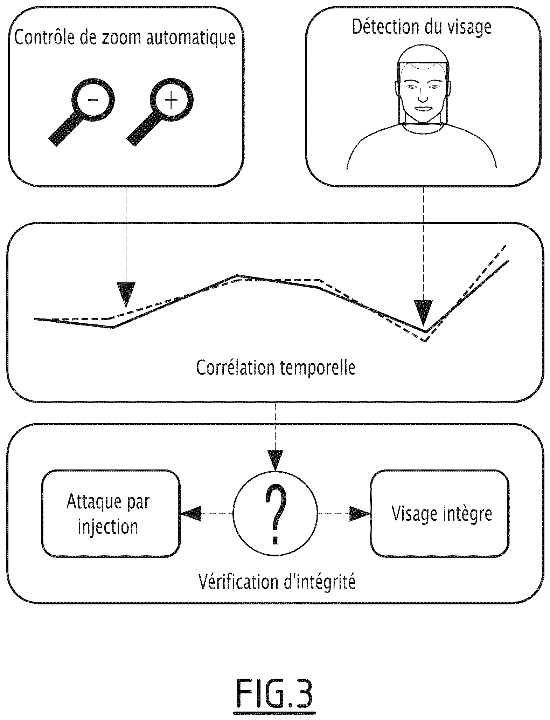

Un procédé de contrôle de l'intégrité d'une vidéo d'authentification d'un utilisateur de l'appareil électronique 10 va maintenant être décrit en référence à l'organigramme de la figure 2 et au schéma explicatif de la figure 3.

Le procédé de contrôle comprend une étape 100 de génération aléatoire, par l'unité de calcul 16, d'une fonction de contrôle du zoom.

La fonction de contrôle du zoom est propre à contrôler le zoom de la caméra 14 sur une durée, dite période de temps de référence. La période de temps de référence est divisée en N segments temporels. N est un nombre entier supérieur à deux.

La fonction de contrôle du zoom associe une action de zoom, parmi plusieurs actions de zoom possibles, à chacun des N segments temporels.

Par exemple, la fonction de contrôle du zoom est sous la forme suivante :

$$f = \{\delta_1 * z_1, \delta_1 * z_2, ..., \delta_N * z_N\} \qquad (1)$$

Avec :

- N le nombre de segments temporels inclus dans la fonction de contrôle du zoom,
- $z_k$ : l'action de zoom associée à chaque segment temporel, avec par exemple $z_k = \{o, i, h\}$ où $o$ est une action de zoom arrière, i une action de zoom avant, et h une action de non déplacement du zoom,

- $\delta_i$ désigne le i-ème segment temporel.

La fonction de contrôle du zoom est calibrée pendant $\delta_1$ lorsque le zoom est maintenu sur 1x. Pour préserver la sécurité, f est générée dans l'appareil électronique 10 afin de rendre plus difficile l'utilisation de vidéos préenregistrées. Le nombre N et les actions associées à chaque segment temporel $z_k$ sont générées en temps réel au début de la vérification. Cela permet de rendre plus difficile l'utilisation de vidéos préenregistrées pour la vérification de l'authenticité.

De préférence, la fonction de contrôle du zoom est cryptée. Cela permet de complexifier une éventuelle interception en temps réel de cette fonction.

De préférence, les durées des segments temporels sont différentes en fonction du segment considéré. En variante, les segments temporels sont de durées identiques les uns des autres.

De préférence, la période de temps de référence est supérieure ou égale à 3 secondes. De préférence, la durée de chacun des N segments temporels est comprise entre 10 et 100 millisecondes.

De préférence, au moins l'un du nombre N, de la durée de chaque segment temporel et de la période de temps de référence, est généré aléatoirement pour chaque fonction de contrôle du zoom.

De préférence, les actions de zoom possibles sont les actions suivantes : zoom avant, zoom arrière et maintien du zoom actuel.

De préférence, l'action de zoom associée à chacun des N segments temporels de la fonction de contrôle du zoom est choisie de sorte que lors de l'étape d'acquisition de la vidéo, l'intégralité de la surface du visage de l'utilisateur soit dans le champ de vision de la caméra 14 pour chacun des N segments temporels.

Pour cela, la surface du visage de l'utilisateur à acquérir au début et à la fin de chacune des N périodes de temps est, par exemple, estimée, de sorte que les actions de zoom ne conduisent pas à un excès de zoom qui occasionnerait une détection seulement partielle du visage. Dans un exemple, un filtre est utilisé pour que la transition entre le niveau de zoom actuel et le niveau de zoom courant se fasse en douceur.

Dans un exemple d'implémentation, une variable permet de garder en mémoire une trace du niveau de zoom actuel, qui est mis à jour chaque fois que le niveau de zoom cible est atteint. Cela permet de récupérer le niveau de zoom actuel à tout moment.

La fonction de contrôle du zoom est générée à la volée et n'est ainsi pas à la disposition des attaquants. Ces derniers ne peuvent donc pas éditer des vidéos préenregistrées pour adapter la taille des visages détectés à la séquence de zoom prévue.

La fonction de contrôle du zoom est, par exemple, générée suite à la réception, par l'unité de calcul 16, d'une commande d'acquisition d'une vidéo d'authentification. Par exemple, la commande est lancée suite à une action de déverrouillage de l'appareil électronique 10, cette action ayant été enclenchée par un utilisateur.

Le procédé de contrôle comprend une étape 110 d'acquisition, par la caméra 14, d'une vidéo du visage de l'utilisateur positionné dans le champ de vision de la caméra 14, pendant une durée égale à la période de temps de référence, tout en contrôlant automatiquement le zoom selon la fonction de contrôle du zoom.

Ainsi, à l'issue de l'étape 110, il est obtenu une vidéo d'authentification de l'utilisateur dont l'intégrité peut être vérifiée.

Le procédé de contrôle comprend une étape 120 de détection, par l'unité de calcul 16, du visage de l'utilisateur sur la vidéo acquise.

La détection est par exemple réalisée par un algorithme de détection de visage.

Dans un exemple de mise en œuvre, la détection des visages est effectuée à l'aide d'une méthode MTCNN basée sur l'apprentissage profond qui est décrite dans l'article suivant : Kaipeng Zhang, Zhanpeng Zhang, Zhifeng Li, and Yu Qiao. Joint face detection and alignment using multitask cascaded convolutional networks. IEEE signal processing letters, 23(10):1499-1503, 2016. Cette méthode a été choisie en raison de ses performances et de sa stabilité, mais aussi parce qu'il existe des implémentations efficaces qui peuvent être déployées sur la plupart des smartphones avec un taux de détection suffisant.

Le présent procédé n'est pas limité à cette méthode spécifique de détection de visage. D'autres algorithmes de détection de visage peuvent aussi être utilisés.

Le procédé de contrôle comprend une étape 130 de détermination, par l'unité de calcul 16, d'une fonction reconstruite de contrôle du zoom en fonction de l'évolution de la surface du visage détecté sur la vidéo.

Dans un exemple de mise en œuvre, l'étape de détermination comprend :

- le calcul d'une surface du visage de référence en moyennant les surfaces du visage détectées sur la vidéo durant le premier segment temporel. En reprenant les notations de l'équation (1), cela revient à calculer la surface du visage de référence $\hat{\gamma}$ sur le segment temporel $\delta_1$.
- pour chacun des N segments temporels, le calcul du rapport entre la moyenne des surfaces du visage détectées sur ledit segment temporel, et la surface du visage de référence. Le rapport calculé est noté $r_j = \frac{r_j}{\hat{r}}$.

- la détermination de la fonction reconstruite de contrôle du zoom en fonction du rapport calculé pour chacun des N segments temporels. En particulier, la fonction reconstruite de contrôle du zoom est l'évolution au cours du temps des rapports calculés.

Le procédé de contrôle comprend une étape 140 de corrélation, par l'unité de calcul 16, de la fonction de contrôle du zoom à la fonction reconstruite de contrôle du zoom de sorte à obtenir au moins un résultat de corrélation.

Dans un exemple de mise en œuvre, l'étape de corrélation 140 comprend l'application de noyaux de convolution aléatoires sur les fonctions à comparer.

Plus précisément, la corrélation entre les deux fonctions est traitée comme un problème de classification binaire de séries temporelles. L'algorithme MiniRocket est décrit dans l'article Angus Demptser et. al. MINIROCKET: A Very Fast (Almost) Deterministic Transform for Time Series Classification. Cet algorithme applique un ensemble de noyaux convolutifs générés de manière aléatoire aux séries temporelles, en utilisant différentes valeurs de biais et facteurs de dilatation.

Spécifiquement à l'application, plusieurs séries temporelles auxiliaires sont générées à partir des deux séries initiales, c'est-à-dire à partir d'une part d'une série temporelle de la fonction de contrôle du zoom (première série initiale) et d'autre part à partir d'une série de la fonction reconstruite de contrôle du zoom (seconde série initiale). En particulier, une première série auxiliaire est la différence des deux séries initiales. Une seconde série auxiliaire est la différence des dérivées des deux séries initiales. Des noyaux de convolution aléatoires (par exemple 10000) sont appliqués aux séries initiales et aux séries auxiliaires (dans un exemple : application à trois séries prises aléatoirement parmi les séries initiales et les séries auxiliaires). La proportion de valeurs positives est extraite (pour chaque convolution, on obtient une valeur positive ou non, donc pour 10000 convolutions on obtient une proportion de valeurs positives) et un classifieur est appliqué à la proportion de valeurs positives extraite pour obtenir le résultat de classification. Le classifieur est, par exemple, un classifieur de crête, permettant d'obtenir un résultat de classification binaire : correspondance vérifiée, ou attaque.

Une méthode alternative basée sur la corrélation de Pearson entre les deux séries temporelles a été expérimentée. La correspondance entre les séries est validée lorsque le coefficient de corrélation (formant le résultat de classification) dépasse un seuil prédéfini, offrant un compromis intéressant entre un temps de calcul réduit et une précision satisfaisante.

Le présent procédé n'est pas limité à ces méthodes spécifiques de corrélation. D'autres méthodes alternatives pour déterminer une corrélation entre la fonction de contrôle du zoom et la fonction reconstruite de contrôle du zoom sont également possibles.

La vidéo est considérée intègre avec l'utilisateur physiquement présent devant la caméra 14, seulement lorsque le résultat de classification l'indique comme tel. Dans ce cas, la vidéo est considérée exploitable pour authentifier l'utilisateur, et mettre en œuvre un procédé d'authentification de l'utilisateur. Une telle authentification peut, par exemple, être mise en œuvre par l'unité de calcul 16.

Dans le cas contraire, la vidéo est invalidée, et considérée comme résultant d'une potentielle attaque par injection.

En particulier, la figure 3 illustre à gauche un contrôle de zoom qui crée un comportement de zoom attendu à l'aide de la fonction de contrôle du zoom générée aléatoirement. A droite de cette figure, le détecteur de visage fournit une séquence de visages échantillonnés à partir du flux vidéo. La surface des visages de la séquence est utilisée pour déterminer une fonction reconstruite de contrôle du zoom, permettant de vérifier si les visages du flux vidéo suivent la fonction attendue de contrôle du zoom. L'algorithme prédit à partir des deux fonctions si la vidéo est considérée intègre. Dans le cas contraire une attaque par injection est prédite.

Ainsi, le présent procédé introduit un moyen alternatif de contrôle de l'intégrité d'une vidéo d'authentification d'un utilisateur, en combinant l'utilisation contrôlée du zoom de la caméra 14 et la détection du visage de l'utilisateur sur la vidéo.

En particulier, l'utilisateur se tient simplement devant la caméra 14 tandis que le zoom est contrôlé à l'aide d'une fonction aléatoire générée localement. Aucune action spécifique n'est donc requise de l'utilisateur. L'algorithme de corrélation entre une fonction attendue et une fonction reconstruite basée sur la surface des visages détectés permet de déterminer si l'authenticité est vérifiée ou si une attaque par injection est réalisée.

Ce procédé de vérification de l'intégrité d'une vidéo est donc simple à mettre en œuvre et convivial pour l'utilisateur. Il fonctionne en outre sur n'importe quel appareil équipé d'un zoom.

Un tel procédé a été évalué à l'aide d'un ensemble de données comprenant 600 vidéos de 5 secondes de 25 sujets uniques, avec 24 séquences pour chaque sujet. Nous avons évalué la méthode en appliquant l'algorithme de corrélation entre toutes les fonctions de contrôle du zoom déduites et générées. La précision de classification obtenue est de 0,97 à 5000 ms. La méthode alternative utilisant une corrélation de Pearson obtient 0.94. La méthode est robuste aux séquences courtes puisqu'une précision de 0.92 est obtenue pour 2000ms (0.85 pour Pearson) .

L'homme du métier comprendra que les modes de réalisation et variantes précédemment décrits peuvent être combinés entre eux pourvu qu'ils soient compatibles techniquement.

## Revendications

1. Procédé de contrôle de l'intégrité d'une vidéo d'authentification d'un utilisateur d'un appareil électronique (10), l'appareil électronique (10) comprenant un dispositif électronique de contrôle (12) comprenant une caméra (14) dotée d'un zoom automatique et une unité de calcul (16), le procédé de vérification étant mis en œuvre par le dispositif électronique de contrôle (12) et comprenant les étapes suivantes :

   a. la génération aléatoire, par l'unité de calcul (16), d'une fonction de contrôle du zoom, la fonction de contrôle du zoom étant propre à contrôler le zoom de la caméra (14) sur une durée, dite période de temps de référence, divisée en N segments temporels, N étant un nombre entier supérieur à deux, la fonction de contrôle du zoom associant une action de zoom, parmi plusieurs actions de zoom possibles, à chacun des N segments temporels,
   b. l'acquisition, par la caméra (14), d'une vidéo du visage de l'utilisateur positionné dans le champ de vision de la caméra (14), pendant une durée égale à la période de temps de référence, tout en contrôlant automatiquement le zoom selon la fonction de contrôle du zoom,
   c. la détection, par l'unité de calcul (16), du visage de l'utilisateur sur la vidéo acquise,
   d. la détermination, par l'unité de calcul (16), d'une fonction reconstruite de contrôle du zoom en fonction de l'évolution de la surface du visage détecté sur la vidéo, et
   e. la corrélation, par l'unité de calcul (16), de la fonction de contrôle du zoom à la fonction reconstruite de contrôle du zoom de sorte à obtenir un résultat de classification indiquant ou non si la vidéo peut être considérée intègre avec l'utilisateur physiquement présent devant la caméra (14).

2. Procédé selon la revendication 1, dans lequel les actions de zoom possibles sont les actions suivantes : zoom avant, zoom arrière et maintien du zoom actuel.

3. Procédé selon la revendication 1 ou 2, dans lequel lors de l'étape de génération aléatoire, au moins l'un du nombre N, de la durée de chaque segment temporel et de la période de temps de référence, est généré aléatoirement pour chaque fonction de contrôle du zoom.

4. Procédé selon l'une quelconque des revendications 1 à 3, dans lequel la durée d'au moins deux segments temporels est différente.

5. Procédé selon l'une quelconque des revendications 1 à 4, dans lequel l'action de zoom associée à chacun des N segments temporels de la fonction de contrôle du zoom est choisie de sorte que lors de l'étape d'acquisition de la vidéo, l'intégralité de la surface du visage de l'utilisateur soit dans le champ de vision de la caméra (14) pour chacun des N segments temporels.

6. Procédé selon l'une quelconque des revendications 1 à 5, dans lequel l'étape de détermination comprend :

   a. le calcul d'une surface du visage de référence en moyennant les surfaces du visage détectées sur la vidéo durant le premier segment temporel,
   b. pour chacun des N segments temporels, le calcul du rapport entre la moyenne des surfaces du visage détectées sur ledit segment temporel, et la surface du visage de référence, et
   c. la détermination de la fonction reconstruite de contrôle du zoom en fonction du rapport calculé pour chacun des N segments temporels.

7. Procédé selon l'une quelconque des revendications 1 à 6, dans lequel l'étape de corrélation comprend la génération de séries temporelles auxiliaires à partir de deux séries initiales, les séries initiales étant une série de la fonction de contrôle du zoom et une série de la fonction reconstruite de contrôle du zoom, une première série auxiliaire étant la différence des deux séries initiales, une seconde série auxiliaire étant la différence des dérivées des deux séries initiales, des noyaux de convolution aléatoires étant appliqués aux séries initiales et aux séries auxiliaires, et la proportion de valeurs positives étant extraite, un classifieur étant appliqué à la proportion de valeurs positives extraite pour obtenir le résultat de classification.

8. Procédé selon l'une quelconque des revendications 1 à 7, dans lequel la période de temps de référence est supérieure ou égale à 3 secondes.

9. Dispositif électronique de contrôle (12) de l'intégrité d'une vidéo d'authentification d'un utilisateur d'un appareil électronique (10), le dispositif électronique de contrôle (12) étant compris dans l'appareil électronique (10), le dispositif électronique de contrôle (12) comprenant une caméra (14) dotée d'un zoom automatique et une unité de calcul (16), le dispositif électronique de contrôle (12) étant configuré pour mettre en œuvre un procédé selon l'une quelconque des revendications 1 à 8.

10. Appareil électronique (10), tel qu'un téléphone portable ou une tablette connectée, comprenant un dispositif électronique de contrôle (12) selon la revendication 9.

10

14

12

16

FIG.1

```
┌─────────────────────────────────────┐
│                                     │
│                 100                 │
│                ─────                │
│                                     │
└─────────────────────────────────────┘
                   │
                   ▼
┌─────────────────────────────────────┐
│                                     │
│                 110                 │
│                ─────                │
│                                     │
└─────────────────────────────────────┘
                   │
                   ▼
┌─────────────────────────────────────┐
│                                     │
│                 120                 │
│                ─────                │
│                                     │
└─────────────────────────────────────┘
                   │
                   ▼
┌─────────────────────────────────────┐
│                                     │
│                 130                 │
│                ─────                │
│                                     │
└─────────────────────────────────────┘
                   │
                   ▼
┌─────────────────────────────────────┐
│                                     │
│                 140                 │
│                ─────                │
│                                     │
└─────────────────────────────────────┘
```

## FIG.2

**FIG.3**

Europäisches Patentamt
European Patent Office
Office européen des brevets

# RAPPORT DE RECHERCHE EUROPEENNE

**Numéro de la demande**

EP 25 22 4773

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,P | FR 3 154 528 A1 (UNISSEY [FR]) 25 avril 2025 (2025-04-25) * alinéa [0002] - alinéa [0041] * ----- | 1-10 | INV. G06F21/32 G06V40/40 G06V40/16 |
| A | US 2023/368206 A1 (TURGEMAN AVI [US] ET AL) 16 novembre 2023 (2023-11-16) * le document en entier * ----- | 1-10 | |
| A | CN 116 193 102 A (TENCENT TECH SHENZHEN CO LTD) 30 mai 2023 (2023-05-30) * le document en entier * ----- | 1-10 | |
| A | US 2014/230046 A1 (DEWAN PRASHANT [US] ET AL) 14 août 2014 (2014-08-14) * le document en entier * ----- | 1-10 | |

**DOMAINES TECHNIQUES RECHERCHES (IPC)**

G06F
G06V

Le présent rapport a été établi pour toutes les revendications

| Lieu de la recherche | Date d'achèvement de la recherche | Examinateur |
|---|---|---|
| Munich | 20 avril 2026 | Kletti, Till |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

**EP 4 764 913 A1**

## ANNEXE AU RAPPORT DE RECHERCHE EUROPEENNE
## RELATIF A LA DEMANDE DE BREVET EUROPEEN NO.

EP 25 22 4773

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2026

| Document brevet cité au rapport de recherche | | Date de publication | Membre(s) de la famille de brevet(s) | | Date de publication |
|---|---|---|---|---|---|
| FR 3154528 | A1 | 25-04-2025 | FR | 3154528 A1 | 25-04-2025 |
|  |  |  | WO | 2025083377 A1 | 24-04-2025 |
| US 2023368206 | A1 | 16-11-2023 | AUCUN | | |
| CN 116193102 | A | 30-05-2023 | AUCUN | | |
| US 2014230046 | A1 | 14-08-2014 | CN | 104106080 A | 15-10-2014 |
|  |  |  | EP | 2798577 A1 | 05-11-2014 |
|  |  |  | JP | 5837232 B2 | 24-12-2015 |
|  |  |  | JP | 2015503866 A | 02-02-2015 |
|  |  |  | US | 2014230046 A1 | 14-08-2014 |
|  |  |  | WO | 2013100898 A1 | 04-07-2013 |

EPO FORM P0460

## RÉFÉRENCES CITÉES DANS LA DESCRIPTION

**Littérature non-brevet citée dans la description**

- **KAIPENG ZHANG** ; **ZHANPENG ZHANG** ; **ZHI-FENG LI** ; **YU QIAO**. Joint face detection and alignment using multitask cascaded convolutional networks.. *IEEE signal processing letters*, 2016, vol. 23 (10), 1499-1503

- **ANGUS DEMPTSER**. *MINIROCKET: A Very Fast (Almost) Deterministic Transform for Time Series Classification*